# EUROPEAN PATENT SPECIFICATION

(11) **EP 3 854 582 B1**
(45) Date of publication and mention of the grant of the patent: **08.07.2026**
(21) Application number: 19862314.2
(22) Date of filing: 18.09.2019
(51) Int. Cl.: B32B 27/08, B32B 27/06, B32B 27/36, C08G 63/78, B32B 15/09, C08L 67/02, B29C 51/46, B32B 15/08

(54) **DOUBLE-LAYER POLYESTER FILM AND LAMINATED METAL SHEET**
DOPPELSCHICHTIGE POLYESTERFOLIE UND LAMINIERTES METALLBLECH
FILM DE POLYESTER À DOUBLE COUCHE ET FEUILLE MÉTALLIQUE STRATIFIÉE

(30) Priority: 19.09.2018 CN 201811090600
(43) Date of publication of application: 28.07.2021
(73) Proprietor: BAOSHAN IRON & STEEL CO., LTD., Shanghai 201900 (CN)
(72) Inventor: XIE, Long, Shanghai 201900 (CN); CHEN, Hongxing, Shanghai 201900 (CN); DAI, Jingge, Shanghai 201900 (CN)
(74) Representative: Kuhnen & Wacker Patent- und Rechtsanwaltsbüro PartG mbB
(86) International application number: PCT/CN2019/106483
(87) International publication number: WO 2020/057557

(56) References cited:
- WO-A1-2015/171193
- WO-A1-2015/171193
- CN-A- 102 964 574
- CN-A- 105 377 944
- CN-A- 105 377 944
- CN-A- 105 985 612
- CN-A- 106 142 785
- CN-A- 106 957 616
- JP-A- H08 209 101
- JP-B2- 4 679 344
- US-A- 5 814 385

## Description

### Technical Field

The present invention relates to the field of film-laminated metal plates for metal packaging, and more particularly to a double-layer polyester film and a film-laminated metal plate.

### Background Art

In the metal can making industry, a traditional practice is to coat the surface of a metal plate, and then shape the metal plate into a can. The solvent-based coating used in the coating process contains substances not safe to food, such as bisphenol A. During the coating process, a large amount of solvent evaporates, leading to environmental problems and large energy consumption. In recent years, the community of the industry has been committed to developing qualified new materials to address the above challenges.

Film-laminated steel is obtained by directly bonding a flexible polyester film to a metal plate together by hot melt lamination. It can meet the requirements of downstream users for can-making processing; differentiated printing; filling of various contents; acid, base or salt resistance in high-temperature sterilization; and long shelf life.

As environmental protection policies become more and more stringent and people's concern about food safety increases, the film-laminated steel has attracted more and more attention as a new environmentally friendly high-performance material in the canmaking industry. In recent years, the film-laminated steel products of some companies have been marketed. In order to meet the differentiated needs of different uses, the design of the raw materials and film structure of the polyester film needs to be optimized to meet the different requirements of the downstream processes.

CN 1839036 A discloses a film-laminated metal plate and a drawn can using the same. This patent uses a double-layer film for lamination on a thin metal plate. Defects such as delamination and spalling occur easily during the canmaking process. A vinyl ionomer is used as an intermediate bonding layer which has poor performance during filling and high temperature sterilization.

CN 102432984 A discloses a cast polyester film and a metal plate and a metal can using the same. This patent uses a monolayer polyester film for lamination on a metal sheet. The insufficient barrier resistance of the film tends to provide the resulting can with poor resistance to acids, bases and salts in the filling process and poor performance in high-temperature sterilization.

CN 106142782 B discloses a polyester film for thermal lamination on steel and a method of preparing the same. This patent is characterized by lamination of a polyester film having a three-layer structure on a metal sheet. Because the performance of the film is limited by the high crystallinity of the lower skin layer, its processability and formability are not sufficient, and thus it is not suitable for uses involving deep drawing and complex deformation.

CN 102463725 A discloses a polyester film and a method of preparing the same. The polyester film of this patent has a three-layer (ABA) structure, and is used in the field of electronic tags. The film structure is characterized by the same resin material for two skin layers. Hence, it is difficult to meet the various performance requirements such as bonding with a metal plate, contact with a mold for molding, contact with the contents of a container, which easily leads to difficulties in balancing performances, not suitable for the canmaking industry.

Moreover, the patent documents WO 2015/171193 A1, JP H08-209101 A, US 005814385 A and CN 102964574 A disclose polyester films according to prior art.

In the prior art, the single-layer film that meets the requirements of the deep drawing of a film-laminated metal plate does not have sufficient resistance to acids, bases or salts in the filling process or sufficient performance in high-temperature sterilization, while a multi-layer film that meets the requirements of resistance to acids, bases or salts in the filling process or sufficient performance in high-temperature sterilization cannot meet the requirements of the deep drawing process. For a traditional double-layer film, interlayer delamination of the film easily occurs during deep processing and forming. In a traditional film, an anti-blocking agent is added in the form of a silicon-containing chip master batch, such that there are too many types of resins in the film. Such a film is not suitable for deep drawing.

### Summary

An object of the present invention is to provide a double-layer polyester film and a film-laminated metal plate, such that the requirements of deep drawing and complex deformation as well as the performance requirements of metal containers for food or beverage packaging can be satisfied.

In order to achieve the above object, the following technical solution is adopted according to the present invention.

According to one aspect of the present invention, there is provided a double-layer polyester film, wherein the double-layer polyester film comprises two layers including an upper layer and a lower layer, wherein the upper layer comprises a copolyester and an additional resin, and the lower layer comprises a copolyester and optionally an additional resin, wherein each of the copolyester in the upper layer and the copolyester in the lower layer comprises 800-2000 ppm by mass of SiO₂ added by in-situ polymerization, wherein the additional resin is selected from the group consisting of a homopolyester resin, a polyester resin comprising a titanium dioxide master batch, a golden polyester master batch resin and any mixtures thereof, wherein in the polyester resin comprising a titanium dioxide master batch, a mass percentage of TiO₂ is 40-80%; and wherein the double-layer polyester film has uniform crystallization property. Preferably, SiO₂ in the copolyester has a content of 1000-1500 ppm by mass.

According to one aspect of the present invention, there is provided a double-layer polyester film, wherein the double-layer polyester film comprises two layers including an upper layer and a lower layer, wherein each of the upper layer and the lower layer comprises a copolyester and an additional resin, wherein the copolyester and the additional resin form a homogeneous mixture, wherein the copolyester comprises 1200 ppm by mass of SiO₂ added by in-situ polymerization.

In the double-layer polyester film according to one aspect of the present invention, the copolyester is a PET polyester modified by copolymerization of isophthalic acid, 1,4-cyclohexanedimethanol, and neopentyl glycol.

In the double-layer polyester film according to one aspect of the present invention, the copolyester has a melting point of 200-240°C. Preferably, the copolyester has a melting point of 210-230°C.

In the double-layer polyester according to one aspect of the present invention, the copolyester has an intrinsic viscosity of 0.68-0.72 dL/g.

In the double-layer polyester according to one aspect of the present invention, the copolyester has an intrinsic viscosity of 0.75-0.78dL/g after solid phase tackification.

In the double-layer polyester film according to one aspect of the present invention, the homopolyester resin is selected from the group consisting of PET, PBT and PPT. Preferably, the homopolyester resin has a melting point of 250-270 °C, preferably 258-265 °C.

In the double-layer polyester film according to one aspect of the present invention, the double-layer structured polyester film is made by co-extrusion and biaxial stretching at a temperature of 250-280°C.

In the double-layer polyester film according to one aspect of the present invention, the mass proportion of the additional resin in the upper layer is not more than 40%, and the mass proportion of the additional resin in the lower layer film is not more than 10%.

In the double-layer polyester film according to one aspect of the present invention, the mass proportion of the additional resin in the upper layer is 10-35% in some embodiments. Preferably, the proportion of the additional resin in the upper layer is not more than 30%. In some embodiments, the mass proportion of the additional resin in the lower layer is greater than 0% to ≤10%. In some embodiments, the lower layer does not comprise any additional resin.

In the double-layer polyester film according to one aspect of the present invention, the copolyester in the upper layer and the copolyester in the lower layer have the same melting point.

In a method of preparing the double-layer polyester film for medium-end to high-end food or beverage packaging according to one aspect of the present invention, the upper layer has a thickness of 8-25 µm, and the lower layer has a thickness of 3-6 µm.

Preferably, the lower layer has a thickness of 4-5 µm.

In the method of preparing the double-layer polyester film for medium-end to high-end food or beverage packaging according to one aspect of the present invention, the copolyester has a melting point of 200-240°C.

Preferably, the copolyester has a melting point of 210-230°C.

According to another aspect of the present invention, there is provided a film-laminated metal plate comprising a metal substrate and the abovementioned double-layer polyester film laminated on a surface of the metal substrate.

In the film-laminated metal plate according to another aspect of the present invention, the double-layer polyester film is thermally bonded to the surface of the metal substrate at a pressure of 2-10 Kg and a temperature of 180-260 °C.

In the film-laminated metal plate according to another aspect of the present invention, the metal substrate has a thickness of 0.10-0.50mm, and the metal substrate is selected from the group consisting of a chromium-plated steel plate, a tin-plated steel plate, a low-tin steel plate (a tin coating weight of ≤1.1g/m²), a galvanized steel plate, a cold-rolled steel plate, and a stainless steel plate.

According to still another aspect of the present invention, there is provided a metal container for medium-end to high-end food or beverage packaging, wherein the metal container is made of the film-laminated metal plate described above.

Compared with the prior art, the present invention has the following beneficial effects: the double-layer polyester film of the present invention exhibits an excellent performance in thermal bonding to the metal plate, and it's more special in that it can be used for deep drawing and various complex deformation processes without delamination in the film. In addition, the double-layer polyester film of the present invention provides better corrosion resistance than a monolayer film.

Due to the addition of SiO₂ to the polymer in the in-situ polymerization, the crystallization properties of the polyester film are improved uniformly on the whole. By substituting the traditional way of adding SiO₂ in the form of master batch, addition of a high melting point resin to the film is avoided. The above two points have improved the overall performance of the polyester film significantly, and the complex processing endurance and corrosion resistance of the film-laminated steel comprising the film of the present invention have been improved notably.

### Detailed Description

The present invention provides a double-layer polyester film, wherein the double-layer polyester film comprises two layers including an upper layer and a lower layer, wherein the upper layer comprises a copolyester and an additional resin, and the lower layer comprises a copolyester and optionally an additional resin. Generally, the mass proportion of additional resin in the upper layer film is not more than 40%, for example, not more than 30%, or not more than 20%. In some embodiments, the mass proportion of the additional resin in the upper layer film is 10-30%. The mass proportion of additional resin in the lower layer film is not more than 10%, e.g., 0-10%. In some embodiments, the mass proportion of the additional resin in the lower layer film is greater than 0% to ≤10%, for example, 2-10%. The upper layer generally has a thickness of 8-25 µm, and the lower layer generally has a thickness of 3-6 µm. Preferably, the lower layer has a thickness of 4-5 µm.

The copolyester used to form the double-layer polyester film of the present invention is preferably a PET polyester modified by copolymerization of isophthalic acid, 1,4-cyclohexanedimethanol and neopentyl glycol. The copolyester comprises 800-2000 parts by mass of SiO₂ added by in-situ polymerization. Preferably, SiO₂ in the copolyester has a conent of 1000-1500 ppm by mass, preferably 1200 ppm by mass. The term "added by in-situ polymerization" or the like as used herein refers to mixing SiO₂ with the monomers for synthesizing the copolyester (i.e. terephthalic acid, ethylene glycol, isophthalic acid, 1,4-cyclohexanedimethanol and neopentyl dimethanol), and then polymerizing to produce the copolyester according to the present invention. A conventional process for preparing PET polyester may be used to prepare the copolyester of the present invention. Preferably, the copolyester suitable for the present invention has a melting point of 200-240°C, preferably 210-230°C. Preferably, the copolyester of the present invention has an intrinsic viscosity of 0.68-0.72 dL/g. Preferably, the copolyester of the present invention has an intrinsic viscosity of 0.75-0.78 dL/g after solid phase tackification.

In the present invention, the intrinsic viscosity is measured by using a technique commonly used in the art.

As used herein, "additional resin" refers to a resin other than the copolyester described herein, including but not limited to a homopolyester resin, a polyester resin comprising a titanium dioxide master batch, a golden polyester master batch resin and any mixtures thereof.

Homopolyesters suitable for the present invention include but are not limited to PET, PBT and PPT. Preferably, the homopolyester resin has a melting point of 250-270 °C, preferably 258-265 °C.

In the polyester resin comprising a titanium dioxide master batch suitable for the present invention, the mass percentage of TiO₂ is 40-80%, preferably 55-65%. Preferably, the polyester resin comprising a titanium dioxide master batch has a melting point of 250-270 °C, preferably 255-265 °C.

The golden polyester master batch resin preferably has a melting point of 250-270 °C, preferably 258-265 °C.

Preferably, when a mixture of two additional resins is used, such as a mixture of a homopolyester and a golden polyester master batch resin used as the additional resin, the mass ratio may be in the range of 1:3 to 3:1.

Preferably, when the lower layer comprises an additional resin, the additional resin is preferably a homopolymer resin.

The double-layer polyester film of the present invention can be made by co-extrusion and biaxial stretching at a temperature of 250-280°C.

The double-layer polyester film of the present invention can be used for medium-end to high-end food or beverage packaging.

There is further provided a film-laminated metal plate according to the present invention, wherein the film-laminated metal plate comprises a metal substrate and the double-layer polyester film described in any of the embodiments herein and laminated on a surface of the metal substrate. The double-layer polyester film of the present invention can be thermally bonded to the surface of the metal substrate at a pressure of 2-10 kg and a temperature of 180-260°C. Generally, the metal substrate has a thickness of 0.10-0.50 mm. The metal substrate suitable for the present invention may be selected from the group consisting of a chromium-plated steel plate, a tin-plated steel plate, a low-tin steel plate, a galvanized steel plate, a cold-rolled steel plate, and a stainless steel plate.

There is still further provided a metal container for medium-end to high-end food or beverage packaging according to the present invention, wherein the metal container is made of the film-laminated metal plate described in any of the embodiments in the present invention.

In the following detailed description, the objectives, features, and advantages of the present invention will become clearer and more apparent with reference to the non-limiting examples, and the content is sufficient to enable those skilled in the art to understand and implement the present invention.

### Example 1

In the method of producing a polyester film, the polyester film was manufactured by a biaxial stretching process at a manufacturing temperature of 250-280°C, wherein the polyester film comprised a copolyester and an additional resin, wherein the copolyester was a PET polyester modified by copolymerization of isophthalic acid, 1,4-cyclohexanedimethanol and neopentyl glycol, and had a melting point of 200°C. The polyester film was manufactured by a double-layer co-extrusion process, and the film comprised two layers including an upper layer and a lower layer, wherein the upper layer had a thickness of 8-25 µm, and the lower layer had a thickness of 3-6 µm. The upper and lower layers each were a mixture of the copolyester and the additional resin that were mixed homogeneously, wherein the upper layer film comprised 70% by mass of the copolyester having a melting point of 200°C and 30% by mass of a homopolyester having a melting point of 262°C; and the lower layer film comprised 95% by mass of the copolyester having a melting point of 200°C and 5% by mass of the homopolyester resin having a melting point of 262°C. The copolyester comprised 1200 ppm SiO₂ added by in-situ polymerization.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Example 2

In the method of producing a polyester film, the polyester film was manufactured by a biaxial stretching process at a manufacturing temperature of 250-280°C, wherein the polyester film comprised a copolyester and an additional resin, wherein the copolyester was a PET polyester modified by copolymerization of isophthalic acid, 1,4-cyclohexanedimethanol and neopentyl glycol, and had a melting point of 240°C. The polyester film was manufactured by a double-layer co-extrusion process, and the film comprised two layers including an upper layer and a lower layer, wherein the upper layer had a thickness of 8-25 µm, and the lower layer had a thickness of 3-6 µm. The upper and lower layers each were a mixture of the copolyester and the additional resin that were mixed homogeneously, wherein the upper layer film comprised 80% by mass of the copolyester having a melting point of 240°C and 20% by mass of a homopolyester having a melting point of 262°C; and the lower layer film comprised 90% by mass of the copolyester having a melting point of 240°C and 10% by mass of the homopolyester resin having a melting point of 262°C. The copolyester comprised 1200 ppm SiO₂ added by in-situ polymerization.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Example 3

In the method of producing a polyester film, the polyester film was manufactured by a biaxial stretching process at a manufacturing temperature of 250-280°C.

The polyester film comprised a copolyester and an additional resin, wherein the copolyester was a PET polyester modified by copolymerization of isophthalic acid, 1,4-cyclohexanedimethanol and neopentyl glycol, and had a melting point of 230°C. The polyester film was manufactured by a double-layer co-extrusion process, and the film comprised two layers including an upper layer and a lower layer, wherein the upper layer had a thickness of 8-25 µm, and the lower layer had a thickness of 3-6 µm. The upper and lower layers each were a mixture of the copolyester and the additional resin that were mixed homogeneously, wherein the upper layer film comprised 70% by mass of the copolyester having a melting point of 230°C and 30% by mass of an additional resin, wherein the additional resin comprised 1/3 by mass of a homopolyester having a melting point of 262°C and 2/3 by mass of a golden polyester master batch resin having a melting point of 262°C; and the lower layer film comprised 98% by mass of the copolyester having a melting point of 230°C and 2% by mass of the homopolyester resin having a melting point of 262°C. The copolyester comprised 1200 ppm SiO₂ added by in-situ polymerization.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Example 4

In the method of producing a polyester film, the polyester film was manufactured by a biaxial stretching process at a manufacturing temperature of 250-280°C, wherein the polyester film comprised a copolyester and an additional resin, wherein the copolyester was a PET polyester modified by copolymerization of isophthalic acid, 1,4-cyclohexanedimethanol and neopentyl glycol, and had a melting point of 230°C. The polyester film was manufactured by a co-extrusion process, and the film comprised two layers including an upper layer and a lower layer, wherein the upper layer had a thickness of 8-25 µm, and the lower layer had a thickness of 3-6 µm. The upper layer comprised a mixture of the copolyester and the additional resin which were mixed homogeneously, wherein the upper layer film comprised 90% by mass of the copolyester having a melting point of 230°C and 10% by mass of a homopolyester having a melting point of 262°C; wherein the lower layer film comprised 100% by mass of the copolyester having a melting point of 230°C. The copolyester comprised 1200 ppm SiO₂ added by in-situ polymerization.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Example 5

In the method of producing a polyester film, the polyester film was manufactured by a biaxial stretching process at a manufacturing temperature of 250-280°C, wherein the polyester film comprised a copolyester and an additional resin, wherein the copolyester was a PET polyester modified by copolymerization of isophthalic acid, 1,4-cyclohexanedimethanol and neopentyl glycol, and had a melting point of 230°C. The polyester film was manufactured by co-extrusion of an upper layer, an intermediate layer and a lower layer, wherein the total thickness of the upper layer and the intermediate layer was 8-25 µm, and the thickness of the lower layer was 3-6 µm. The upper layer and the intermediate layer each were a mixture of the copolyester and the additional resin which were mixed homogeneously. These two layers comprised completely the same resins, i.e., 90% by mass of the copolyester having a melting point of 230°C and 10% by mass of a homopolyester having a melting point of 262°C. These two layers were indeed a monolayer structure. The lower layer film comprised 100% by mass of the copolyester having a melting point of 230°C. The copolyester comprised 1200 ppm SiO₂ added by in-situ polymerization.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Example 6

In the method of producing a polyester film, the polyester film was manufactured by a biaxial stretching process at a manufacturing temperature of 250-280°C, wherein the polyester film comprised a copolyester and an additional resin, wherein the copolyester was a PET polyester modified by copolymerization of isophthalic acid, 1,4-cyclohexanedimethanol and neopentyl glycol, and had a melting point of 230°C. The polyester film was manufactured by a double-layer co-extrusion process, and the film comprised two layers including an upper layer and a lower layer, wherein the upper layer had a thickness of 8-25 µm, and the lower layer had a thickness of 3-6 µm. The upper and lower layers each were a mixture of the copolyester and the additional resin that were mixed homogeneously, wherein the upper layer film comprised 70% by mass of the copolyester having a melting point of 230°C and 30% by mass of a homopolyester having a melting point of 262°C; and the lower layer film comprised 90% by mass of the copolyester having a melting point of 230°C and 10% by mass of the homopolyester resin having a melting point of 262°C. The copolyester comprised 1200 ppm SiO₂ added by in-situ polymerization.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Example 7

In the method of producing a polyester film, the polyester film was manufactured by a biaxial stretching process at a manufacturing temperature of 250-280°C, wherein the polyester film comprised a copolyester and an additional resin, wherein the copolyester was a PET polyester modified by copolymerization of isophthalic acid, 1,4-cyclohexanedimethanol and neopentyl glycol, and had a melting point of 210°C. The polyester film was manufactured by a co-extrusion process, and the film comprised two layers including an upper layer and a lower layer, wherein the upper layer had a thickness of 8-25 µm, and the lower layer had a thickness of 3-6 µm. The upper and lower layers each were a mixture of the copolyester and the additional resin that were mixed homogeneously, wherein the upper layer film comprised 70% by mass of the copolyester having a melting point of 210°C and 30% by mass of a homopolyester having a melting point of 262°C; and the lower layer film comprised 92% by mass of the copolyester having a melting point of 210°C and 8% by mass of the homopolyester resin having a melting point of 262°C. The copolyester comprised 800 ppm SiO₂ added by in-situ polymerization.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Example 8

In the method of producing a polyester film, the polyester film was manufactured by a biaxial stretching process at a manufacturing temperature of 250-280°C, wherein the polyester film comprised a copolyester and an additional resin, wherein the copolyester was a PET polyester modified by copolymerization of isophthalic acid, 1,4-cyclohexanedimethanol and neopentyl glycol, and had a melting point of 210°C. The polyester film was manufactured by a double-layer co-extrusion process, and the film comprised two layers including an upper layer and a lower layer, wherein the upper layer had a thickness of 8-25 µm, and the lower layer had a thickness of 3-6 µm. The upper and lower layers each were a mixture of the copolyester and the additional resin that were mixed homogeneously, wherein the upper layer film comprised 68% by mass of the copolyester having a melting point of 210°C and 32% by mass of a homopolyester having a melting point of 262°C; and the lower layer film comprised 90% by mass of the copolyester having a melting point of 210°C and 10% by mass of the homopolyester resin having a melting point of 262°C. The copolyester comprised 2000 ppm SiO₂ added by in-situ polymerization.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Example 9

In the method of producing a polyester film, the polyester film was manufactured by a biaxial stretching process at a manufacturing temperature of 250-280°C, wherein the polyester film comprised a copolyester and an additional resin, wherein the copolyester was a PET polyester modified by copolymerization of isophthalic acid, 1,4-cyclohexanedimethanol and neopentyl glycol, and had a melting point of 210°C. The polyester film was manufactured by a double-layer co-extrusion process, and the film comprised two layers including an upper layer and a lower layer, wherein the upper layer had a thickness of 8-25 µm, and the lower layer had a thickness of 3-6 µm. The upper and lower layers each were a mixture of the copolyester and the additional resin that were mixed homogeneously, wherein the upper layer film comprised 65% by mass of the copolyester having a melting point of 210°C and 35% by mass of a homopolyester having a melting point of 262°C; and the lower layer film comprised 90% by mass of the copolyester having a melting point of 210°C and 10% by mass of the homopolyester resin having a melting point of 262°C. The copolyester comprised 1200 ppm SiO₂ added by in-situ polymerization.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Example 10

In the method of producing a polyester film, the polyester film was manufactured by a biaxial stretching process at a manufacturing temperature of 250-280°C, wherein the polyester film comprised a copolyester and an additional resin, wherein the copolyester was a PET polyester modified by copolymerization of isophthalic acid, 1,4-cyclohexanedimethanol and neopentyl glycol, and had a melting point of 230°C. The polyester film was manufactured by a double-layer co-extrusion process, and the film comprised two layers including an upper layer and a lower layer, wherein the upper layer had a thickness of 8-25 µm, and the lower layer had a thickness of 3-6 µm. The upper and lower layers each were a mixture of the copolyester and the additional resin that were mixed homogeneously, wherein the upper layer film comprised 65% by mass of the copolyester having a melting point of 230°C and 35% by mass of a homopolyester having a melting point of 262°C; and the lower layer film comprised 90% by mass of the copolyester having a melting point of 230°C and 10% by mass of the homopolyester resin having a melting point of 262°C. The copolyester comprised 1200 ppm SiO₂ added by in-situ polymerization.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Comparative Example 1

A monolayer polyester film was made from a modified PET resin having a melting point of 210°C by using a casting process.

Preparation of film-laminated steel: the monolayer polyester film prepared using the casting process was thermally bonded to the surface of a 0.19mm chromium-plated steel plate at a pressure of 2-10 kg and a temperature of 180-260°C to obtain the film-laminated steel.

### Comparative Example 2

In a three-layer biaxially stretched polyester film, the upper layer resin was a 3µm PET resin, the intermediate layer comprised a 14µm blended resin of 265°C PET and 210°C PET (having a blending ratio of 7:3), and the lower layer comprised a 3µm modified PET resin having a melting point of 210°C.

Preparation of film-laminated steel: the prepared biaxially stretched polyester film was thermally bonded to the surface of a 0.19 mm chromium-plated steel plate at a pressure of 2-10 kg and a temperature of 180-260°C to obtain the film-laminated steel, wherein the lower layer was thermally laminated on the steel plate.

### Comparative Example 3

In a three-layer biaxially stretched polyester film having an ABA structure, the upper layer resin was a modified PET resin having a melting point of 210°C, the intermediate layer comprised a PET resin having a melting point of 265°C, and the lower layer comprised a modified PET resin having a melting point of 210°C. The thickness ratio of the three layers was 1:8:1.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Comparative Example 4

A double-layer biaxially stretched polyester film was prepared using a vinyl ionomer as an intermediate bonding layer.

Preparation of film-laminated steel: the polyester film prepared by the biaxial stretching process was thermally bonded to the surface of a 0.19 mm chromium-plated steel plate at a pressure of 2-10 kg and a temperature of 180-260°C to obtain the film-laminated steel.

### Test Example

The film-laminated metal plates obtained in Examples 1-10 and Comparative Examples 1-4 were processed using the Draw and Redraw process (DRD) under the following processing conditions. They were formed into can bodies by punching three times. The 20 µm functional film prepared was located on both the inner and outer sides of the cans at the same time.

Processing conditions (Draw and Redraw process)
1.Blank diameter: 172mm.
2.First-pass processing conditions
   Punch diameter: 114.5mm;
   Die clearance: 0.36mm;
   Blank holder force: 4000kg;
   Mold assembly temperature before molding: 55°C.
3.Second-pass processing conditions
   Punch diameter: 88mm;
   Die clearance: 0.4mm;
   Blank holder force: 3000kg;
   Mold assembly temperature before molding: 55°C.
4.Third-pass processing conditions
   Punch diameter: 65.3mm;
   Die clearance: 0.43mm;
   Blank holder force: 2000kg;
   Mold assembly temperature before molding: 55°C.
   After molding, conventional processes in can making were used for necking and flanging.

The cans prepared by the above methods were evaluated by the methods described below. The results are shown in Table 1.
(1) Adhesion of resin film in processing
The resin film layer laminated on the steel plate surface was visually evaluated to see whether it was peeled off or not during the processing steps of the DRD can prepared under the abovementioned forming and processing conditions. The result where no peeling occurred till the final step is excellent.
(2) Acid resistance performance: After the film-laminated steel was punched into a can (can size 691), acid resistance performance evaluation was performed to represent corrosion resistance performance evaluation. The film-laminated can was filled with a 20 g/L citric acid solution. After the can was capped, the solution was boiled at 121°C for 60 min. After cooling, the sample was taken out, and spots corroded by the acid on the surface of the sample were observed to evaluate the acid resistance performance of the film-laminated steel.
(3) Sulfur resistance performance: After the film-laminated steel was punched into a can (can size 691), sulfur resistance performance evaluation was performed to represent corrosion resistance performance evaluation. The film-laminated can was filled with a 1% Na₂S solution. After the can was capped, the solution was boiled at 121°C for 60 min. After cooling, the sample was taken out, and sulfide spots on the surface of the sample were observed to evaluate the sulfur resistance performance of the film-laminated steel.
(4) Flavor retention: After the film-laminated steel was punched into a can (can size 691), the can was filled with Tsingtao Snow Beer (manufactured by Tsingtao Brewery Company). After the filled can was sealed by using a conventional method, it was stored at 37°C for three weeks. The can was opened after the three weeks of storage, and an evaluation panel of 100 people inspected the taste retention of the content. The taste retention is excellent if 90 or more people considered that there was no difference in the taste of the content before and after the storage, good if 60 or more people considered that there was no difference, and poor if less than 60 people considered that there was no difference.

**Table 1**

| Test Item | Adhesion in Processing | Acid Resistance | Sulfur Resistance | Flavor Retention |
|---|---|---|---|---|
| Example 1 | ⊚ | ⊚ | ⊚ | Excellent |
| Example 2 | ⊚ | ⊚ | ⊚ | Excellent |
| Example 3 | ⊚ | ⊚ | ⊚ | Excellent |
| Example 4 | ⊚ | ⊚ | ○ | Good |
| Example 5 | ⊚ | ⊚ | ○ | Good |
| Example 6 | ⊚ | ⊚ | ⊚ | Excellent |
| Example 7 | ⊚ | ⊚ | ⊚ | Excellent |
| Example 8 | ⊚ | ⊚ | ⊚ | Excellent |
| Example 9 | ○ | ⊚ | ⊚ | Excellent |
| Example 10 | ○ | ⊚ | ⊚ | Excellent |
| Comparative Example 1 | ⊚ | ○ | △ | △ |
| Comparative Example 2 | X | - | - | - |
| Comparative Example 3 | X | - | - | - |
| Comparative Example 4 | - | - | - | - |

| | | | | |
|---|---|---|---|---|
| Note: in Table 1, X means poor; △ means mediocre; o means good; ⊚ means very good; - means unable to be evaluated. | | | | |

In the above Examples, the copolyester and an additional resin were blended and then formed into films having a double-layer structure including an upper layer and a lower layer. The formability of the films made by both the casting process and the biaxial stretching process is good, and the polyester films having a small thickness can be prepared. The polyester films have many advantages, such as excellent performance in thermal bonding to a metal plate, excellent endurance in deep drawing processing and complex deformation processing, and excellent corrosion resistance, widely useful in the metal packaging industry.

By adding SiO₂ to the copolyester in the in-situ synthesis, no conventional silicon-containing polyester chips are used in the polyester films, so involvement of a variety of polyester resins (having a melting point of greater than 245°C) is avoided. As a result, not only the basic requirements of an anti-blocking agent are satisfied, but also the overall performance of the films can be improved significantly.

## Claims

1. A double-layer polyester film, wherein the double-layer polyester film comprises two layers including an upper layer and a lower layer, wherein the upper layer comprises a copolyester and an additional resin, and the lower layer comprises a copolyester and optionally an additional resin, wherein each of the copolyester in the upper layer and the copolyester in the lower layer comprises 800-2000 ppm by mass of SiO₂ added by in-situ polymerization, wherein the additional resin is selected from the group consisting of a homopolyester resin, a polyester resin comprising a titanium dioxide master batch, a golden polyester master batch resin and any mixtures thereof; wherein in the polyester resin comprising a titanium dioxide master batch, a mass percentage of TiO₂ is 40-80%; and wherein the double-layer polyester film has uniform crystallization property.

2. The double-layer polyester film according to claim 1, wherein the double-layer polyester film comprises two layers including an upper layer and a lower layer, wherein each of the upper layer and the lower layer comprises a copolyester and an additional resin, wherein the copolyester and the additional resin form a homogeneous mixture, wherein the copolyester comprises 1200 ppm by mass of SiO₂ added by in-situ polymerization.

3. The double-layer polyester film according to claim 1, wherein the copolyester is a PET polyester modified by copolymerization of isophthalic acid, 1,4-cyclohexanedimethanol, and neopentyl glycol.

4. The double-layer polyester film according to claim 1, wherein the upper layer film comprises the additional resin in a proportion of not more than 40%, and the lower layer film comprises the additional resin in a proportion of not more than 10%.

5. The double-layer polyester film according to claim 1, wherein the upper layer film comprises the additional resin in a proportion of not more than 30%.

6. The double-layer polyester film according to claim 1, wherein the upper layer has a thickness of 8-25 µm, and the lower layer has a thickness of 3-6 µm.

7. The double-layer polyester film according to claim 6, wherein the lower layer has a thickness of 4-5 µm.

8. A method of manufacturing the double-layer polyester film according to claim 1, wherein the double-layer polyester film is made by co-extrusion and biaxial stretching at a temperature of 250-280°C.

9. A film-laminated metal plate comprising a metal substrate and the double-layer polyester film according to any one of claims 1-7 laminated on a surface of the metal substrate.

10. The film-laminated metal plate according to claim 9, wherein the metal substrate has a thickness of 0.10-0.50 mm, and the metal substrate is selected from the group consisting of a chromium-plated steel plate, a tin-plated steel plate, a low-tin steel plate, a galvanized steel plate, a cold-rolled steel plate and a stainless steel plate.

11. A method of manufacturing the film-laminated metal plate according to claim 9, wherein the method comprises direct lamination of the polyester film on a heated surface of the metal substrate by hot melt lamination.

12. A metal container for medium-end to high-end food or beverage packaging, wherein the metal container is made of the film-laminated metal plate according to any one of claims 9-10.

## Patentansprüche

1. Ein zweischichtiger Polyesterfilm, wobei der zweischichtige Polyesterfilm zwei Schichten umfasst, einschließlich einer oberen Schicht und einer unteren Schicht, wobei die obere Schicht ein Copolyester und ein zusätzliches Harz umfasst und die untere Schicht ein Copolyester und gegebenenfalls ein zusätzliches Harz umfasst, wobei sowohl der Copolyester in der oberen Schicht als auch der Copolyester in der unteren Schicht 800-2000 ppm bezogen auf Masse SiO₂ enthalten, das durch In-situ-Polymerisation zugegeben wurde, wobei das zusätzliche Harz aus der Gruppe, bestehend aus einem Homopolyesterharz, einem Polyesterharz, das ein Titandioxid-Masterbatch enthält, einem Polyester-Harz vom *"Golden Masterbatch*"-Typ und beliebigen Mischungen davon ausgewählt ist; wobei in dem Polyesterharz, das ein Titandioxid-Masterbatch enthält, der Massenanteil an TiO₂ 40 bis 80 % beträgt; und wobei der zweischichtige Polyesterfilm einheitliche Kristallisationseigenschaften aufweist.

2. Der zweischichtige Polyesterfilm nach Anspruch 1, wobei der zweischichtige Polyesterfilm zwei Schichten umfasst, einschließlich einer oberen Schicht und einer unteren Schicht, wobei sowohl die obere als auch die untere Schicht ein Copolyester und ein zusätzliches Harz umfassen, wobei der Copolyester und das zusätzliche Harz ein homogenes Gemisch bilden, wobei der Copolyester 1200 ppm bezogen auf Masse SiO₂ enthält, das durch In-situ-Polymerisation zugegeben wurde.

3. Der zweischichtige Polyesterfilm nach Anspruch 1, wobei der Copolyester ein PET-Polyester ist, der durch Copolymerisation von Isophthalsäure, 1,4-Cyclohexandimethanol und Neopentylglykol modifiziert wurde.

4. Der zweischichtige Polyesterfilm nach Anspruch 1, wobei die obere Filmschicht das zusätzliche Harz in einem Anteil von nicht mehr als 40 % enthält und die untere Filmschicht das zusätzliche Harz in einem Anteil von nicht mehr als 10 % enthält.

5. Der zweischichtige Polyesterfilm nach Anspruch 1, wobei die obere Filmschicht das zusätzliche Harz in einem Anteil von nicht mehr als 30 % enthält.

6. Der zweischichtige Polyesterfilm nach Anspruch 1, wobei die obere Schicht eine Dicke von 8 bis 25 µm und die untere Schicht eine Dicke von 3 bis 6 µm aufweist.

7. Der zweischichtige Polyesterfilm nach Anspruch 6, wobei die untere Schicht eine Dicke von 4-5 µm aufweist.

8. Ein Verfahren zur Herstellung des zweischichtigen Polyesterfilms nach Anspruch 1,
wobei der zweischichtige Polyesterfilm durch Coextrusion und biaxiales Strecken bei einer Temperatur von 250-280 °C hergestellt wird.

9. Eine filmbeschichtete Metallplatte, umfassend ein Metallsubstrat und der zweischichtigen Polyesterfilm nach einem der Ansprüche 1 bis 7, die auf eine Oberfläche des Metallsubstrats laminiert ist.

10. Die filmbeschichtete Metallplatte nach Anspruch 9, wobei das Metallsubstrat eine Dicke von 0,10 bis 0,50 mm aufweist und das Metallsubstrat aus der Gruppe, bestehend aus einer verchromten Stahlplatte, einer verzinnten Stahlplatte, einer zinnarmen Stahlplatte, einer verzinkten Stahlplatte, einer kaltgewalzten Stahlplatte und einer Edelstahlplatte ausgewählt ist.

11. Ein Verfahren zur Herstellung der filmbeschichteten Metallplatte nach Anspruch 9, wobei das Verfahren das direkte Laminieren des Polyesterfilms auf eine erwärmte Oberfläche des Metallsubstrats durch Heißklebelaminierung umfasst.

12. Ein Metallbehälter für Lebensmittel- oder Getränkeverpackungen der mittleren bis oberen Preisklasse, wobei der Metallbehälter aus der filmbeschichteten Metallplatte nach einem der Ansprüche 9-10 hergestellt ist.

## Revendications

1. Un film de polyester à double couche, dans lequel ledit film de polyester à double couche comprend deux couches, à savoir une couche supérieure et une couche inférieure, la couche supérieure comprenant un copolyester et une résine supplémentaire, et la couche inférieure comprenant un copolyester et, éventuellement, une résine supplémentaire, chacun des copolyesters de la couche supérieure et de la couche inférieure comprenant 800 à 2 000 ppm en masse de SiO₂ ajouté par polymérisation in situ, dans lequel la résine supplémentaire est choisie parmi le groupe constitué d'une résine homopolyester, d'une résine polyester comprenant un mélange-maître de dioxyde de titane, d'une résine polyester de type « golden masterbatch » et de tout mélange de celles-ci ; dans lequel, dans la résine polyester comprenant un mélange-maître de dioxyde de titane, le pourcentage massique de TiO₂ est de 40 à 80 % ; et dans lequel le film polyester à double couche présente une propriété de cristallisation uniforme.

2. Le film de polyester à double couche selon la revendication 1, dans lequel ledit film de polyester à double couche comprend deux couches, à savoir une couche supérieure et une couche inférieure, chacune de ces couches comprenant un copolyester et une résine supplémentaire, le copolyester et la résine supplémentaire formant un mélange homogène, et le copolyester contenant 1 200 ppm en masse de SiO₂ ajouté par polymérisation in situ.

3. Le film de polyester à double couche selon la revendication 1, dans lequel le copolyester est un polyester PET modifié par copolymérisation d'acide isophtalique, de 1,4-cyclohexanediméthanol et de néopentylglycol.

4. Le film de polyester à double couche selon la revendication 1, dans lequel la couche supérieure contient la résine supplémentaire dans une proportion ne dépassant pas 40 %, et la couche inférieure contient la résine supplémentaire dans une proportion ne dépassant pas 10 %.

5. Le film de polyester à double couche selon la revendication 1, dans lequel la couche supérieure du film contient la résine supplémentaire dans une proportion ne dépassant pas 30 %.

6. Le film de polyester à double couche selon la revendication 1, dans lequel la couche supérieure ayant une épaisseur de 8 à 25 µm, et la couche inférieure ayant une épaisseur de 3 à 6 µm.

7. Le film de polyester à double couche selon la revendication 6, dans lequel la couche inférieure ayant une épaisseur de 4 à 5 µm.

8. Un procédé de fabrication du film de polyester à double couche selon la revendication 1, dans lequel le film de polyester à double couche est fabriqué par coextrusion et étirage biaxial à une température de 250 à 280 °C.

9. Une plaque métallique laminée d'un film comprenant un substrat métallique et le film de polyester à double couche selon l'une quelconque des revendications 1 à 7, stratifié sur une surface du substrat métallique.

10. La plaque métallique laminée d'un film selon la revendication 9, dans laquelle le substrat métallique a une épaisseur de 0,10 à 0,50 mm, et le substrat métallique est choisi parmi le groupe constitué d'une plaque d'acier chromée, d'une plaque d'acier étamée, d'une plaque d'acier à faible teneur en étain, d'une plaque d'acier galvanisée, d'une plaque d'acier laminée à froid et d'une plaque d'acier inoxydable.

11. Un procédé de fabrication de la plaque métallique laminée d'un film selon la revendication 9, dans lequel le procédé comprend la stratification directe du film de polyester sur une surface chauffée du substrat métallique par stratification à chaud.

12. Un récipient métallique destiné à l'emballage de produits alimentaires ou de boissons de gamme moyenne à haut de gamme, ledit récipient métallique étant constitué de la plaque métallique laminée d'un film selon l'une quelconque des revendications 9-10.
